# EUROPÄISCHE PATENTSCHRIFT

(11) **EP 0 330 098 B1**
(45) Veröffentlichungstag und Bekanntmachung des Hinweises auf die Patenterteilung: **14.09.1994**
(21) Anmeldenummer: 89102825.0
(22) Anmeldetag: 18.02.1989
(51) Int. Cl.: E06C 7/08, F16B 17/00, F16B 7/04

(54) **Leiter**
Ladder
Echelle

(30) Priorität: 23.02.1988 DE 8802330 U
(43) Veröffentlichungstag der Anmeldung: 30.08.1989
(73) Patentinhaber: ZARGES Leichtbau GmbH, D-82362 Weilheim (DE)
(72) Erfinder: Klafs, Ulrich, Dr., D-8120 Weilheim (DE); Mannhardt, Carlheinz, D-8120 Weilheim (DE); Pecher, Heinz, D-8120 Weilheim (DE); Riedl, Oswald, D-8123 Peissenberg (DE)
(74) Vertreter: Patentanwälte Dipl.-Ing. R. Splanemann Dr. B. Reitzner Dipl.-Ing. K. Baronetzky

(56) Entgegenhaltungen:
- DE-A- 1 928 415
- FR-A- 1 336 343
- FR-A- 2 421 267
- FR-A- 2 428 759
- GB-A- 282 958
- US-A- 3 566 992
- US-A- 4 050 831

## Beschreibung

Die Erfindung betrifft eine Leiter, insbesondere für Kabelschächte, gemäß dem Oberbegriff von Anspruch 1.

Es ist bekannt, eine Leiter aus Sprossen und Holmen zu bauen, wobei die Verbindung zwischen den Sprossen und Holmen je über eine Buchse erfolgt. Dabei können die Buchsen im Spritzgußverfahren bei der Herstellung der Leiter erstellt werden. Dieses Herstellungsverfahren ist jedoch ungeeignet, wenn für die Holme Hohlprofile verwendet werden. Um eine dauerhafte Befestigung zu erzielen, müssen die Verbindungen zwischen Sprossen und Holmen einerseits auszugssicher, andererseits biegesteif sein.

Daher ist es bereits aus der GB-A-28 29 58 bekannt, buchsenartige Zwischenstücke aus Metall dadurch mit den Sprossen und Holmen zu verbinden, daß diese verschweißt, vernietet oder verschraubt werden. Derartige Leitern sind jedoch vergleichsweise teuer herzustellen.

Gemäß einer in der FR-A-24 21 267 vorgeschlagenen Lösung ist es bekannt geworden, ein Einsatzstück aus einem elastischen Material als Ersatz für eine Buchse zu verwenden, wobei ein Lagerung der Sprosse nur an der inneren Holmwand erfolgt und ein Noppen des Einsatzstücks in eine entsprechende Ausnehmung in der äußeren Holmwand hineinragt. Diese Leiter hat sich jedoch in der Praxis nicht bewährt, da die Auszugssicherheit der Sprossen nicht in ausreichendem Maße gewährleistet ist und zudem keine auf Dauer torsionsfeste Lagerung besteht, so daß die Leiter ziemlich schnell instabil wird. Zudem eignet sich eine derartige Konstruktion nicht für eine automatisierte Fertigung, da überraschend große Mengen an Ausschuß erzeugt werden.

Ferner ist es bekannt, die für die Verbindung zwischen Sprosse und Holm eingesetzte Buchse zweiteilig auszubilden, wobei ein Teil von außen und ein Teil von innen in die Sprossenausnehmung in den Holm eingesteckt wird. Der sprossenseitige Buchsenteil wird über die Sprosse gepreßt, wobei die Sprosse durch eine nach innen vorspringende Kante verformt wird. Außerdem besteht ein Preßsitz zwischen den beiden Buchsenteilen. Hierdurch soll eine intensive Verbindung erreicht werden.

Nachteilig hierbei ist jedoch zum einen, daß es sich ebenfalls um eine ziemlich aufwendige Ausbildung der Buchsenverbindung handelt, denn bei der Herstellung müssen zwei Teile pro Sprossenverbindung gehandhabt werden, wobei das Aufpressen zudem Spezialwerkzeuge erfordert. Außerdem findet durch das Verformen der Sprosse eine Materialschwächung statt, die es erfordert, die aus einem Strangpreßprofil bestehende Sprosse insgesamt vergleichsweise dickwandig auszubilden.

Demgegenüber ist es Aufgabe der Erfindung, eine in der Herstellung günstige Leiter gemäß dem Oberbegriff von Anspruch 1 zu schaffen, welche trotz vergleichsweise geringer Materialstärken eine verbesserte Stabilität bietet und zudem die Möglichkeit eröffnet, die Sprossen/Holmenverbindung maschinell durchzuführen, ohne daß erhöhte Ausschußmengen anfallen würden.

Diese Aufgabe wird erfindungsgemäß durch Anspruch 1 gelöst. Vorteilhafte Weiterbildungen ergeben sich aus den Unteransprüchen.

Dadurch, daß man die Mantelfläche der Buchse beide Holmenwände durchragen läßt, kann zunächst die Buchse "in einem Zug" eingeschoben werden, so daß kein Verkanten erfolgt. Besonders günstig ist die hierdurch zugleich erhöhte Stabilität, denn es wird die Möglichkeit eröffnet, daß die Sprosse sich über entsprechende Bereiche der Mantelfläche an beiden Holmenwänden sicher abstützen kann, was die Torsionssteifigkeit der Leiter entscheidend verbessert. Durch die Verwendung einer echten Buchse wird dennoch über die Buchsenstirnfläche die Sprosse nach außen geschützt, wobei die Stirnfläche der Buchse, die die äußere Holmwand überragt, zugleich auch einen Stoßschutz der äußeren Holmwand bei der rauhen Behandlung bietet. Vorzugsweise ist die Buchse aus einem Material aufgebaut, das die erforderlichen Einfederungen erlaubt, jedoch eine gute Dauersteifigkeit und Formstabilität aufweist.

Zudem findet mit der erfindungsgemäßen Buchse zunächst keine materialschwächende Verformung der Sprosse statt. Dementsprechend kann die Materialstärke so gewählt sein, daß die Stabilität im Trittbereich gewährleistet ist, ohne daß hier eine Überdimensionierung vorgenommen sein müßte. Darüber hinaus stabilisiert die umlaufende Preßpassung der Buchse den Endbereich der Sprosse. Die Befestigung ist auch auszugssicher, da durch die Preßpassung in Verbindung mit der Rastung, gegebenenfalls mit zusätzlicher Riffelung an der der Rastzunge zugewandten Sprosse, die Sprosse selbst nicht aus der Buchse ausgezogen werden kann.

Gemäß einer vorteilhaften Weiterbildung ist die Buchse von außen in den Holm eingesteckt. Hierdurch kann bereits vom Prinzip her aufgrund der entsprechenden Anlageflächen die Buchse nicht durch die Sprossenausnehmung in dem Holm nach innen durchgezogen werden, so daß auch hier Auszugssicherheit besteht. Zusätzlich ergibt sich hierdurch eine unverlierbare Halterung auch für die Buchse selbst, denn durch die Preßpassung wird diese einerseits von innen an die Holmenwand bzw. -wände und andererseits an die Sprosse angepreßt.

Durch die erfindungsgemäße Konstruktion wird ferner die Möglichkeit eröffnet, die Sprossen/Holmenverbindung maschinell zu fertigen. Hierzu werden die Holme mit den Sprossenausnehmungen entsprechend der gewünschten Sprossenlage versehen. Die erfindungsgemäßen Buchsen sind dann beispielsweise aus Kunststoff-Spritzguß vorgefertigt, und die Sprossen, beispielsweise aus Aluminium-Strangpreßprofil, sind in der gewünschten Länge abgeschnitten. Die Sprossen werden dann mit je teileingeführter Buchse an entsprechende Führungsflächen in den Buchsen angelegt, die das Sprossenende in der Buchse zugleich zentrieren. Durch Anpressen der einander gegenüberliegenden Buchsenaußenflächen an beiden Holmen der Leiter über die gesamte Leiterlänge kann dann in einem Arbeitsgang die Leiter fertiggestellt werden, wobei beidseitig jeder Sprosse zugleich die Buchse über die Sprosse und je in die Sprossenausnehmung in dem Holm geschoben und die jeweiligen Preßsitze bzw. die Formschlüssige Verbindung über die Rastzunge an der Sprosse herbeigeführt wird. Der Einsteckvorgang erfolgt dabei entsprechend den Preßkräften, die von der Bemaßung der Preßpassungen Buchse/Holm bzw. Buchse/Sprosse her einstellbar sind.

Bei doppelwandigen Holmen ergibt sich die Möglichkeit, eine Rastnase für das Sichern der Buchse gegen ein Herausfallen entweder auf die innere, d.h. sprossenseitige, Wand oder auf die äußere Wand wirken zu lassen. Bei Ausbildung der Rastnase an der inneren Wand wird die Buchse bereits dann unverlierbar gehalten, wenn die Sprosse soweit in die Buchse eingeführt ist, daß die Buchse nicht mehr um ein der Höhe der Rastnase entsprechendes Maß zusammengedrückt werden kann. Dementsprechend muß die Buchse bei dieser Ausführungsform durch entsprechende Ausbildung der Preßkräfte für die automatische Fertigung während des Buchseneinpressens vollständig in die Sprossenausnehmung eingeführt sein, bevor die Einführung der Sprosse in die Buchse beginnt.

Demgegenüber kann bei Ausbildung der Rastnase an der äußeren Holmenwand die Sprosse bereits ziemlich weit in die Buchse eingeführt sein, wenn die Rastnase einrastet.

Die erfindungsgemäße Buchse eignet sich auch für sog. konische Leitern, also für Leitern, deren Holme von unten nach oben zumindest teilweise aufeinander zulaufen. Hierzu ist es günstig, wenn der Buchsenkörper in gleicher Weise wie bei einer rechtwinkligen Sprossen/Holmenverbindung ausgebildet ist, wobei eine sprossenparallele Sprossenausnehmung in den Holmen vorgesehen ist. Zwar ist es prinzipiell möglich, die gleichen Buchsen für rechtwinklige wie auch für schiefwinklige Sprossen/Holmenverbindungen zu verwenden. Zur Erzielung einer Rundumanlage der äußeren Anlagefläche der Buchse an der äußeren Holmwand ist diese jedoch vorteilhafterweise gegenüber der Senkrechten entsprechend der Schrägstellung des Holms abzuwinkeln, wobei eine entsprechende Abwinklung auch für die holmenseitige Rastnase vorzusehen ist, wenn diese nicht waagerecht angeordnet ist.

Besonders vorteilhaft ist die Bereitstellung vergleichsweise hoher Preßkräfte dadurch, daß die Buchse durch die vollumfängliche Anlage an der Sprossenausnehmung in dieser praktisch eingespannt ist und so eine Preßkraft auf die Sprosse ausgeübt wird, die dem Übermaß der Buchse in dem Spalt zwischen Sprossenausnehmung und Sprosse entspricht, wobei vergleichsweise harte Kunststoffe günstig einsetzbar sind.

Je nach dem gewünschten Einsatzbereich der Leiter ist ein temperaturstabilisierter Kunststoff, also ein Kunststoff, der auch bei niedrigen Temperaturen nicht zu sprödem Verhalten neigt, zu bevorzugen. Entsprechende Kunststoffe können beispielsweise bei Verwendung der erfindungsgemäßen Leitern als Kabelschachtleitern verwendet werden. Günstig hierbei ist es, daß vergleichsweise geringe Kunststoffmengen anfallen, so daß die erfindungsgemäßen Leitern gegenüber buchsenlosen Aluminiumleitern mit angeflanschten Sprossen günstiger herzustellen sind und erheblich preiswerter ausfallen als Vollkunststoffleitern, die den entsprechenden Spezifikationen genügen müssen.

Weitere Einzelheiten, Vorteile und Merkmale ergeben sich aus der nachfolgenden Beschreibung mehrerer Ausführungsbeispiele anhand der Zeichnung.

Es zeigen:
- Fig. 1: eine teilweise geschnittene Ansicht einer Ausführungsform einer erfindungsgemäßen Buchse in in eine Leiter eingebautem Zustand;
- Fig. 2: eine Draufsicht von außen auf die Buchse gemäß Fig. 1;
- Fig. 3: eine teilweise geschnittene horizontale Ansicht der Buchse gemäß Fig. 1; und
- Fig. 4: eine teilweise geschnittene Ansicht einer weiteren Ausführungsform einer erfindungsgemäßen Buchse.

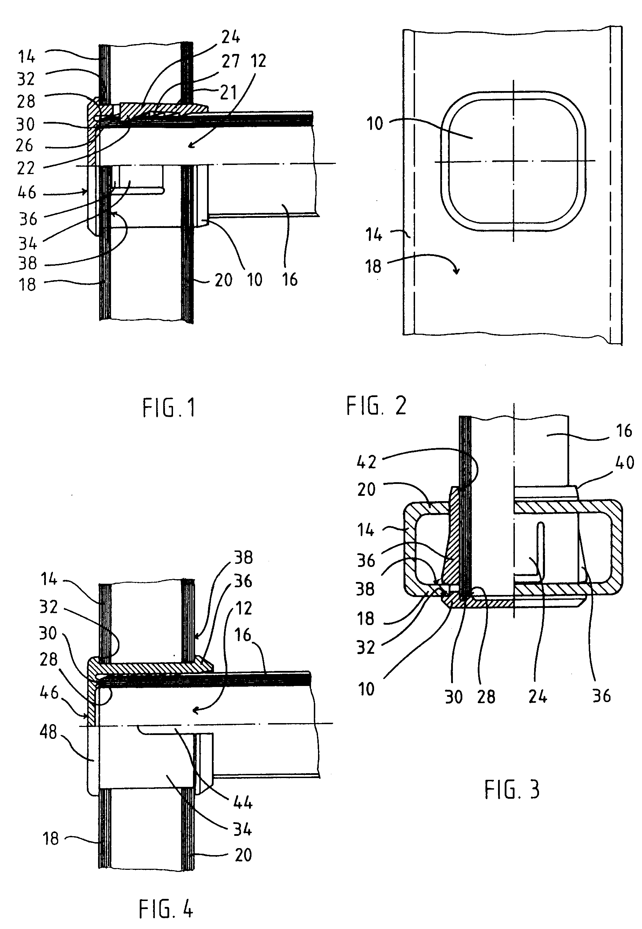

Die in Fig. 1 dargestellte Buchse 10 ist in einer Sprossenausnehmung 12 in einem Holm 14 aufgenommen und umgreift eine Sprosse 16. Die Sprosse 16 erstreckt sich dabei durch eine äußere Holmwand 18 und eine innere, sprossenseitige Holmwand 20. Der Spalt zwischen der Sprossenausnehmung 12 und der Sprosse 16 ist an beiden Holmenwänden 18 und 20 vollständig von der Mantelfläche 21 der Buchse 10 ausgefüllt, so daß die Sprosse 16 an beiden Holmenwänden 18 und 20 abgestützt ist.

Die Buchse 10 weist einen auf die Sprosse 16 zugewandten Vorsprung 22 auf, der an einer Rastzunge 24 ausgebildet ist. Der Vorsprung 22 weist eine nach außen weisende Sperrfläche 26 auf, die gegen das Ausziehen der Sprosse 16 aus der Sprossenausnehmung 12 wirkt und in dem dargestellten Ausführungsbeispiel mit einer sägezahnförmigen Riffelung 27 auf der der Rastzunge 24 zugewandten Oberfläche der Sprosse 16 in Eingriff steht. Hierdurch ist eine formschlüssige Verbindung zwischen der Buchse 10 und der Sprosse 16 erreicht. Die Buchse 10 weist ferner eine umlaufende Stirnanlagefläche 28 auf, an der eine Stirnfläche 30 der Sprosse 16 anliegt. Die Verbindung der Stirnfläche 30 mit der Stirnanlagefläche 28 und der Sperrfläche 26 mit der Riffelung 27 wirken so zusammen, daß die Buchse 10 hierdurch formschlüssig fest auf der Sprosse 16 gehalten ist.

Die Buchse 10 weist ferner eine Anlagefläche 32 auf, die in eingestecktem Zustand der Buchse 10 in der Sprossenausnehmung 12 an der äußeren Fläche der äußeren Holmwand 18 anliegt. Zur sicheren Befestigung der Buchse 10 in dem Holm 14 ist eine mit der Buchse 10 einstückig ausgebildete Federzunge 34 vorgesehen, die eine Rastnase 36 aufweist, die gegen eine Anschlagfläche 38 innen an der äußeren Holmenwand 18 wirkt. Die Ausgestaltung der Rastnase 36 ist so gewählt, daß der Spalt zwischen der äußeren Holmenwand 18 und der Sprosse 16 kleiner als die Höhe der Rastnase ist, so daß bei eingeschobener Sprosse 16 ein Ausziehen der Buchse 14 aus der Sprossenausnehmung 12 sicher verhindert wird.

Die Darstellung in Fig. 1 zeigt eine Rastnase 36 zur formschlüssigen Abstützung der Buchse 10 an dem Holm 14 und eine Rastzunge 24 zur formschlüssigen Abstützung der Buchse 10 an der Sprosse 16. Tatsächlich ist jedoch an der jeweils gegenüberliegenden Wandung der Buchse 10 eine weitere Rastnase bzw. Zunge vorgesehen. Hierbei ist es günstig, wenn die Rastnasen und Rastzungen je um 90° gegeneinander versetzt sind, so daß die Rastzungen je in waagerechten und die Rastnasen in je senkrechten Bereichen der Buchse 14 vorgesehen sind. Die Anordnung der Rastnasen und Rastzungen kann auch vertauscht sein, wenn der gleiche Buchsenkörper für senkrechte und für konische Leitern eingesetzt werden soll.

Aus Fig. 2 ist ersichtlich, wie die Buchse in der Holmenwand angeordnet ist. Entsprechend der Anordnung der Sprosse befindet sich die Buchsenachse und die hierzu koaxiale Sprossenachse in der Mitte des Holms 14. Hierdurch werden die durch die Sprosse 16 eingeleiteten Kräfte von dem Holm 14 gleichmäßig aufgenommen. Die Ausbildung der Buchse 10 ist dem Profil der Sprosse 16 angepaßt, wobei gemäß der Darstellung in Fig. 2 ein quadratischer Sprossenquerschnitt mit abgerundeten Ecken verwendet wird. Gewünschtenfalls kann hier eine der Arbeitsneigung der Leiter entsprechende Ausrichtung der Buchse 10 mit der zugehörigen Sprosse 16 vorgenommen sein, wobei lediglich die Sprossenausnehmung 12 entsprechend auszubilden ist, um hierdurch - wie es an sich bekannt ist - die Begehbarkeit der Leiter zu verbessern.

In Fig. 1 ist genauer ersichtlich, wie sich die Rastnase 36 an der Anschlagfläche 38 an der äußeren Holmwand 18 abstützt. Sobald die Sprosse 16 vollständig in die Buchse 10 eingeschoben ist, ist diese unverlierbar in dem Holm 14 gehalten.

Ferner ist aus Fig. 3 ersichtlich, daß an dem sprossenseitigen Ende der Buchse 10 eine holmenseitige Führungsfläche 40 und eine sprossenseitige Führungsfläche 42 vorgesehen sind. Dementsprechend läuft die Buchse 10 an ihrem sprossenseitigen Ende innen wie außen an den Führungsflächen 40 und 42 je leicht konisch aus. Die Passungen der Führungsflächen 40 und 42 an der Sprosse 16 bzw. an dem Holm 14 sind hierbei so gewählt, daß während des Einsteckvorgangs, der das Ausüben einer Kraft zwischen der Buchse 10 und der Sprosse 16 in Richtung der Pfeile A erfordert, zunächst der Holm 14 über die Führungsfläche 40 gleitet und an der Rastnase 36 bereits einrastet, während die Eindringtiefe der Sprosse 16 in der Buchse 10 noch nicht den Abstand der Holmenwände 18 und 20 voneinander erreicht hat.

In Fig. 4 ist eine weitere Ausführungsform einer erfindungsgemäßen Buchse dargestellt, wobei hier gleiche Bezugszeichen auf gleiche Teile hinweisen. Diese Ausführungsform unterscheidet sich von der in den bisherigen Figuren dargestellten Ausführungsform lediglich dadurch, daß die Rastnase 36 auf eine Anschlagfläche 38 wirkt, die an der inneren, sprossenseitigen Holmwand 20 vorgesehen ist. Die Ausbildung der Federzunge 34 erfolgt hier dadurch, daß in Buchsenachsenrichtung verlaufende Schlitze 44 vorgesehen sind, wobei mindestens zwei und ggf. vier Schlitze 44 um den Umfang der Buchse 10 verteilt angeordnet sind. Aufgrund der zwischen der Sprossenausnehmung 12 und der Buchse 10 einerseits sowie der Buchse 10 und der Sprosse 16 andererseits bestehenden Preßpassung ist die Sprosse 16 auszugssicher in dem Holm 14 gehalten.

Vorteilhaft ist eine Mikrorauhigkeit des für die Buchse 10 verwendeten Kunststoffs, wobei günstigerweise eine Rauhigkeitstiefe von 25 bis 30 um vorgesehen ist, die einer seitlichen Abschlußfläche 46 der Buchse 10 zudem ein ansprechend mattiertes Aussehen gibt. Bei Ausbildung der Buchse 10 aus dem Kunststoff Hostaform F 9063 (eingetragenes Warenzeichen) ergibt sich hierbei aufgrund der Preßpassung eine Auszugskraft von 1500 N (150 kp), die allen an Kabelschachtleitern zu stellenden Ansprüchen genügt.

Besonders günstig ist dementsprechend die Abstützung der Stirnfläche 30 der Sprosse 16 an einem Buchsenboden 48, der die Sprosse 16 so seitlich durchschiebesicher hält, die Stirnfläche 30 der Sprosse 16 schützt und zugleich die äußere Holmwand 18 des Holmes 14 schützt, da der Buchsenboden die äußere Holmwand 18 nach außen überragt. Gemäß dem bevorzugten Ausführungsbeispiel ist der Buchsenboden 48 geschlossen ausgebildet, so daß der Sprosseninnenraum angesichts der Preßpassung der Sprosse praktisch luftdicht abgeschlossen ist, was Vorteile hinsichtlich der Korrosionssicherheit bietet.

Selbstverständlich können auch eine oder mehrere Ausnehmungen in dem Buchsenboden 48 vorgesehen sein, ohne daß die Stütz- und Schützfunktion des Buchsenbodens 48 verlorengeht.

Gemäß einer weiteren Ausführungsform ist es vorgesehen, die Buchse von der Innenseite einzustecken, wobei dennoch der Buchsenboden 48 in seiner Funktion erhalten bleibt. Die Ausrichtung der Rastnase 36, wie auch der Anlagefläche 32, ist dann je vertauscht, so daß die Anlagefläche 32 nach außen und die Rastnase 36 nach innen zeigt.

## Patentansprüche

1. Leiter, insbesondere für den Einstieg in unterirdisch verlegte Kabelschächte, mit zwei Holmen (14), die jeweils innere und äußere Holmwände (20, 18) und Ausnehmungen (12) für Sprossen (16) aufweisen, wobei jede Sprosse (16) über eine Buchse (10) mit einem Holm (14) verbunden ist und die Buchse (10) in dem Holm (14) eingesteckt und eingerastet gelagert ist und wobei die Buchse (10) eine die Sprosse (16) umgebende Mantelfläche (21), einen Buchsenboden und einen der Sprosse (16) zugewandten Vorsprung (22), der an einer zur Sprosse (16) hin federnd vorgespannten Rastzunge (24) angeformt ist, aufweist, dadurch **gekennzeichnet,** daß die Mantelfläche (21) sowohl die inneren als auch die äußeren Holmwände (18, 20) durchsetzt und die Abstützung der Sprosse (16) an dem Holm (14) über die Mantelfläche (21) gleichmäßig in den Holmwänden (18, 20) erfolgt, daß die Buchse (10) mindestens eine zu der äußeren Holmwand (18) hin weisende, gegen eine Holmwand sperrende Holm-Rastnase (36) aufweist und daß die Buchse (10) von der Außenseite in den Holm (14) einsteckbar ist.

2. Leiter nach Anspruch 1, dadurch gekennzeichnet, daß die Rastnase (36) gegen die innere Holmwand (20) sperrt.

3. Leiter nach Anspruch 1 oder 2, dadurch gekennzeichnet, daß die Buchse (10) einstückig ausgebildet ist.

4. Leiter nach einem der vorhergehenden Ansprüche, dadurch gekennzeichnet, daß der Vorsprung (22) an der mit der Buchse (10) einstückig verbundenen Rastzunge (24) einstückig angeformt ist.

5. Leiter nach einem der vorhergehenden Ansprüche, dadurch gekennzeichnet, daß die Sprosse (16) auf der der Rastzunge (24) zugewandten Fläche eine insbesondere sägezahnförmige Riffelung (27) mit nach außer weisenden Sperrflächen aufweist.

6. Leiter nach einem der vorhergehenden Ansprüche, dadurch gekennzeichnet, dar die Buchse (10) eine Anlagefläche (32) aufweist, die einen Anschlag für die von der Sprosse (16) abgewandte Fläche der äußeren Holmwand (18) bildet.

7. Leiter nach einem der vorhergehenden Ansprüche, dadurch gekennzeichnet, daß sprossenseitig an der Buchse (10) ein Innenkonus als Führungsfläche (42) für das Einführen der Sprosse (16) in die Buchse (10) angeformt ist.

8. Leiter nach einem der vorhergehenden Ansprüche, dadurch gekennzeichnet, daß sprossenseitig an der Buchse (10) ein Außenkonus als Führungsfläche (40) für das Einführen der Buchse (10) in den Holm (12) ausgebildet ist, der insbesondere an die Rastnase (36) angeformt ist.

9. Leiter nach einem der vorhergehenden Ansprüche, dadurch gekennzeichnet, daß der Buchsenboden (48) einen Anschlag für die Sprosse (16) bildet, wobei die Sprosse sich im wesentlichen bis zu der äußeren Holmwand (18) erstreckt.

10. Leiter nach einem der vorhergehenden Ansprüche, dadurch gekennzeichnet, daß die Buchse (10) im in den Holm (14) eingesteckten Zustand die Sprosse (16) höchstens unter zurückfedernder Verformung dieser in Preßpassung umschließt.

11. Leiter nach einem der vorhergehenden Ansprüche, dadurch gekennzeichnet, daß die Sprosse (16) sich so weit in die Buchse (10) erstreckt, daß sie die Mantelfläche der Buchse (10) an der äußeren Holmwand (18) von der Buchseninnenseite her abstützt.

12. Leiter nach einem der vorhergehenden Ansprüche, dadurch gekennzeichnet, daß der Buchsenboden (48) der im wesentlichen topfförmig ausgebildeten Buchse (10) die Sprosse (10) nach außen abstützt und schützt und zugleich die äußere Holmwand (18) nach außen hin überragt.

## Claims

1. Ladder, in particular for entering cable pits laid underground, with two side rails (14), each comprising inner and outer rail walls (20, 18) and recesses (12) for rungs (16), each rung (16) being connected with a rail (14) via a bushing (10), and the bushing (10) being inserted into the rail and carried in a locked way, and the bushing (10) comprising a surface area (21) surrounding the rung (16), a bushing bottom and a projecting part (22) facing the rung (16) and being formed onto a catch tongue (24), which is prestressed resiliently to the rung (16), **characterized** in that the surface area (21) passes both the inner and the outer rail walls (18, 20) and the rung (16) is evenly supported at the rail (14) via the surface area (21) in the rail walls (18, 20), that the bushing (10) comprises at least one rail-catch nose (36) facing the outer rail wall (18) and locking against one rail wall, and that the bushing (10) can be inserted into the rail (14) from the outside.

2. Ladder according to claim 1, characterized in that the catch nose (36) locks against the inner rail wall (20).

3. Ladder according to claim 1 or 2, characterized in that the bushing (10) is integrally formed.

4. Ladder according to one of the preceeding claims, characterized in that the projecting part (22) is integrally formed onto the catch tongue (24) connected integrally with the bushing (10).

5. Ladder according to one of the preceeding claims, characterized in that the rung (16) comprises a serrated ribbing (27) with locking areas facing outside on the area facing the catch tongue (24).

6. Ladder according to one of the preceeding claims, characterized in that the bushing (10) comprises a bearing surface (32), which forms a limit stop for the area of the outer rail wall (18) which is opposite the rung (16).

7. Ladder according to one of the preceeding claims, characterized in that an inner cone is formed as guiding surface (42) onto the rung-side of the bushing (10) for inserting the rung (16) into the bushing (10).

8. Ladder according to one of the preceeding claims, characterized in that an outer cone is formed as guiding surface (40) on the rung-side of the bushing (10) for inserting the bushing (10) into the rail (14), which is particularly formed onto the catch nose (36).

9. Ladder according to one of the preceeding claims, characterized in that the bushing bottom (48) forms a limit stop for the rung (16), the rung extending essentially to the outer rail wall (18).

10. Ladder according to one of the preceeding claims, characterized in that the bushing (10) when it is inserted into the rail (14) encloses the rung (16) only in a press fit if it is subjected to a spring-back deformation.

11. Ladder according to one of the preceeding claims, characterized in that the rung (16) extends so far into the bushing (10) that it supports the surface area of the bushing (10) at the outer rail wall (18) from the bushing inside.

12. Ladder according to one of the preceeding claims, characterized in that the bushing bottom (48) of the bushing (10), which is essentially pot-shaped, supports and protects the rung (16) to the outside and at the same time extends beyond the outer rail wall (18) to the outside.

## Revendications

1. Echelle, en particulier pour pénétrer dans des puits à câbles souterrains, avec deux montants (14) qui présentent chacun des parois de montant intérieures et extérieures (20, 18) et des évidements (12) pour des barreaux (16), dans laquelle chaque barreau (16) est relié par une douille (10) à un montant (14) et la douille (10) est supportée en étant insérée et engagée dans le montant (14), et dans laquelle la douille (10) présente une surface d'enveloppe (21) entourant le barreau (16), un fond de douille et une saillie (22) orientée vers le barreau (16), qui est formée sur une languette d'encliquetage (24) précontrainte en direction du barreau (16), caractérisée en ce que la surface d'enveloppe (21) traverse aussi bien la paroi intérieure que la paroi extérieure (18, 20) du montant et l'appui du barreau (16) sur le montant (14) est réalisé par la surface d'enveloppe (21) uniformément dans les parois de montant (18, 20), en ce que la douille (10) présente au moins un bec d'encliquetage (36) du montant orienté vers la paroi de montant extérieure (18) et bloquant contre une paroi de montant, et en ce que la douille (10) peut être introduite dans le montant (14) par l'extérieur.

2. Echelle selon la revendication 1, caractérisée en ce que le bec d'encliquetage (36) bloque contre la paroi de montant intérieure (20).

3. Echelle selon la revendication 1 ou 2, caractérisée en ce que la douille (10) est formée d'un seul tenant.

4. Echelle selon l'une ou l'ensemble des revendications précédentes, caractérisée en ce que la saillie (22) est formée d'un seul tenant sur la languette d'encliquetage (24) reliée d'un seul tenant à la douille (10).

5. Echelle selon l'une ou l'ensemble des revendications précédentes, caractérisée en ce que le barreau (16) présente sur la surface orientée vers la languette d'encliquetage (24) une cannelure (27) en particulier en dents de scie avec des surfaces de blocage orientées vers l'extérieur.

6. Echelle selon l'une ou l'ensemble des revendications précédentes, caractérisée en ce que la douille (10) présente une surface d'appui (32), qui forme une butée pour la surface de la paroi de montant extérieure (18) orientée à l'opposé du barreau (16).

7. Echelle selon l'une ou l'ensemble des revendications précédentes, caractérisée en ce que sur le côté de la douille (10) orienté vers le barreau, un cône intérieur est formé comme surface de guidage (42) pour l'introduction du barreau (16) dans la douille (10).

8. Echelle selon l'une ou l'ensemble des revendications précédentes, caractérisée en ce que sur le côté de la douille (10) orienté vers le barreau un cône extérieur est formé comme surface de guidage (40) pour l'introduction de la douille (10) dans le montant (12), qui est en particulier formé sur le bec d'encliquetage (36).

9. Echelle selon l'une ou l'ensemble des revendications précédentes, caractérisée en ce que le fond de douille (48) forme une butée pour le barreau (16), le barreau s'étendant sensiblement jusqu'à la paroi de montant extérieure (18).

10. Echelle selon l'une ou l'ensemble des revendications précédentes, caractérisée en ce que la douille (10) lorsqu'elle est introduite dans le montant (14) entoure le barreau (16) en ajustement serré tout au plus avec une déformation élastique de celui-ci.

11. Echelle selon l'une ou l'ensemble des revendications précédentes, caractérisée en ce que le barreau (16) s'étend dans la douille (10) sur une distance telle que la surface d'enveloppe de la douille (10) la soutient sur la paroi de montant extérieure (18) à partir de l'intérieur de la douille.

12. Echelle selon l'une ou l'ensemble des revendications précédentes, caractérisée en ce que le fond (48) de la douille (10) sensiblement en forme de pot appuie et protège le barreau (16) vers l'extérieur et dépasse en même temps de la paroi de montant extérieure (18) vers l'extérieur.
